# EUROPÄISCHE PATENTSCHRIFT

(11) **EP 0 498 959 B1**
(45) Veröffentlichungstag und Bekanntmachung des Hinweises auf die Patenterteilung: **22.02.1995**
(21) Anmeldenummer: 91121657.0
(22) Anmeldetag: 18.12.1991
(51) Int. Cl.: A01K 63/04

(54) **Filtereinrichtung zum Einsatz in mit Wasser gefüllten Aquariumgefässen**
Filtration system for waterfilled aquariumtanks
Installation de filtration pour aquarium

(30) Priorität: 09.02.1991 DE 4103944
(43) Veröffentlichungstag der Anmeldung: 19.08.1992
(73) Patentinhaber: JUWEL AQUARIUM GmbH & CO. KG, D-27356 Rotenburg (DE)
(72) Erfinder: Ruegg, Peter, CH-9630 Watthiel (CH)
(74) Vertreter: Niedmers, Ole, Dipl.-Phys.

(56) Entgegenhaltungen:
- EP-A- 484 896
- EP-A- 0 244 904
- BE-A- 807 993
- DE-C- 709 296

## Beschreibung

Die Erfindung betrifft eine Filtereinrichtung zum Einsatz in Aquariumgefäßen, umfassend eine Pumpeneinrichtung zur Förderung des Wassers sowie ein zwischen einem Wassereinlaß zum Eintritt des Rohwassers und einem Wasserauslaß zum Austritt des Reinwassers angeordnetes Filterelement zur Reinigung des Wassers, wobei das Rohwasser zunächst das erste Filterelement vollständig durchläuft und als Reinwasser mit einem 1. Reinheitsgrad zu einem größeren Volumenanteil auf den Wasserauslaß gegeben wird und zu einem kleineren Volumenanteil auf ein zweites Filterelement, welches das Reinwasser in einem 2. Reinheitsgrad verläßt und nachfolgend ebenfalls auf den Wasserauslaß gegeben wird.

Eine Filtereinrichtung dieser Art ist bekannt (DE-C-709 296). Bei dieser bekannten Filtereinrichtung wird das zu reinigende Rohwasser auf ein erstes Filterelement gegeben und es verläßt das Filterelement mit einem 1.

Reinheitsgrad, wobei ein Teil des Reinwasser mit 1. Reinheitsgrad auf ein nachgeschaltetes zweites Filterelement gegeben wird, aus dem es dann als Reinwasser mit einem 2. Reinheitsgrad austritt. Im ersten Filterelement wird allerdings nur eine gröbere Filtrierung erreicht, um sicherzustellen, daß tatsächlich ein größerer Volumenanteil des Wassers sofort nach Durchtritt durch das erste Filterelement ausgekoppelt und in das Aquariumgefäß zurückgeführt werden kann, während ein kleinerer Teil durch das bekannte zweite Filterelement durchgeführt wird, in dem eine Reinigung des mit 1. Reinheitsgrad zugeführten Reinwassers in das mit einem 2. Reinheitsgrad gereinigte Wasser erreicht werden kann. Die Förderung des Reinwassers mit dem 1. Reinheitsgrad und dem 2. Reinheitsgrad erfolgt bei der bekannten Filtereinrichtung mittels zweier gesonderter Luftpumpen, deren Luftanschlüsse jeweils in die Leitungen münden, durch die das Wasser mit 1. Reinheitsgrad bzw. das Wasser mit 2. Reinheitsgrad aus der Filtereinrichtung heraustritt und in das Aquariumgefäß geleitet wird.

Eine derartige Ausgestaltung der Filtereinrichtung ist problematisch, da für die Förderung des Reinwassers mit 1. Reinheitsgrad und mit 2. Reinheitsgrad unterschiedliche Pumpen benötigt werden, die zudem, um die Relation Reinwasser mit 1. Reinheitsgrad zu einem größeren Volumenanteil, Reinwasser mit einem 2. Reinheitsgrad zu einem kleineren Volumenanteil, zu erfüllen, durch aufwendige Steuerungseinrichtungen gesteuert werden müssen. Zwei gesonderte Pumpeneinrichtungen benötigen regelmäßig die doppelte Energie zu ihrem Betrieb und haben quasi eine Verdoppelung der Fehlerquellen in bezug auf einen ordnungsgemäßen Betrieb der Filtereinrichtung zur Folge.

Die nachveröffentlichte EP-A-0 484 896 zeigt eine Filtereinrichtung, bei der das erste Filterelement ein mechanisches Filter ist, während das zweite Filterelement ein biologisches Filter ist.

Filtereinrichtungen dieser Art sind zudem seit langem bekannt und werden mit ausreichendem Erfolg zur Reinigung des in einem Aquariumbehälter befindlichen Wassers eingesetzt, und zwar im mit Fischen und sonstigen Lebewesen sowie Wasserpflanzen besetzten Aquariumgefäß. Es hat sich jedoch gezeigt, daß insbesondere bei bestimmten Arten von Fischen oder in Wasser lebenden Lebewesen fortlaufend eine sehr hohe Reinwassergüte im Aquariumgefäß sichergestellt werden muß, um die Lebewesen im Aquariumgefäß über lange Zeit am Leben zu halten.

Es sind zur Sicherstellung eines hohen Reinheitsgrades des Aquariumwassers viele, zum Teil sehr aufwendige Maßnahmen ergriffen worden, um dieses sicherzustellen, die dazu erdachten Lösungen erwiesen sich jedoch alle als mehr oder weniger nicht anwendbar für den praktischen Einsatz, da sie vielfach eine zusätzliche Wartungs- bzw. Beobachtungstätigkeit durch den Menschen verlangten, was aber dem grundsätzlichen Bestreben, derartige Filtereinrichtungen völlig wartungsfrei und bedienungsfrei auszugestalten, zuwiderlief. Aber auch die Kosten für die Herstellung und den Betrieb dieser aufwendigen Filtereinrichtungen ließen den massenhaften Einsatz in Aquariumgefäßen nicht zu und sie benötigten zudem ein erhebliches Volumen bei ihrem Einsatz im Aquariumgefäß, so daß sie sich für kleinere Aquariumgefäße nicht eigneten.

Es ist Aufgabe der vorliegenden Erfindung, eine Reinigungseinrichtung der eingangs genannten Art zu schaffen, mit der mit einfachen Mitteln ein sehr hoher Reinheitsgrad des Aquariumwassers fortlaufend erreicht wird, der sehr viel größer als bei bekannten Einrichtungen dieser Art ist, die sehr einfach im Aufbau und damit kostengünstig herstellbar und bereitstellbar ist, die leicht gereinigt und gewartet werden kann und ein geringes Einbauvolumen im Aquarium benötigt.

Gelöst wird die Aufgabe gemäß der Erfindung dadurch, daß das Reinwasser mit 1. und 2. Reinheitsgrad einer gemeinsamen Auslaufkammer zugeführt wird, die mit dem Wasserauslaß verbunden ist, wobei das erste Filterelement ein biologisches Filter und das zweite Filterelement ein mechanisches Filter ist.

Der Vorteil der erfindungsgemäßen Filtereinrichtung besteht im wesentlichen darin, daß hiermit eine sogenannte zweiphasige Filterung des zu reinigenden Aquariumwassers, im folgenden Rohwasser genannt, stattfindet, und zwar in der ersten Filterstufe in Form einer im wesentlichen biologischen Filterung des Rohwassers und in der zweiten Stufe eine zusätzliche mechanische Filterung im Sinne einer Reinstfilterung eines Teils des aus dem ersten Filterelement austretenden Reinwassers mit einem ersten Reinheitsgrad. Untersuchungen haben gezeigt, daß eine fortlaufende Reinigung des Rohwassers nach diesem Prinzip einerseits eine insgesamt extrem hohe Wassergüte des Aquariumwassers zur Folge hat und andererseits eine eigentliche Reinigung bzw. Erneuerung des Aquariumwassers dadurch erst in sehr viel längeren Zeiträumen durchgeführt werden muß, gegenüber den Erneuerungszyklen des Aquariumwassers bei bisher bekannten Filtereinrichtungen. Grundsätzlich ist es zwar denkbar, daß das Reinwasser nach 1. und 2. Reinheitsgrad getrennt jeweils gesondert wieder in das Aquariumgefäß abgegeben wird, die erfindungsgemäße Lösung ermöglicht jedoch eine verhältnismäßig einfache Ausgestaltung des Förderweges des Gesamtreinwassers, zusammengesetzt aus den unterschiedlichen Reinheitsgradanteilen, so daß jeweils gesonderte Fördereinrichtungen nicht vorgesehen zu werden brauchen.

Gemäß einer vorteilhaften Ausgestaltung der Erfindung beträgt der Volumenanteil des Reinwassers mit einem 1. Reinheitsgrad ca. 70 % und der des Reinwassers mit einem 2. Reinheitsgrad ca. 30 %, wobei allerdings diese jeweiligen Anteile auch andere Beträge aufweisen können, d. h. je nach Ausführungsform durch Variation der Filterelemente auf den jeweiligen gewünschten Reinheitsgrad bzw. Reinheitsgradanteil eingestellt werden können.

Dabei ist es von Vorteil, daß zwischen Auslaufkammer und Wasserauslaß die Pumpeneinrichtung angeordnet ist. Zwar ist es grundsätzlich möglich, die Pumpeneinrichtung an eine beliebig geeignete Stelle in den Wasserkreislauf einzufügen, beispielsweise unmittelbar nach dem Reinwasserauslauf oder vor dem Rohwassereinlauf, die hier vorgeschlagene vorteilhafte Position zum Vorsehen der Pumpeneinrichtung hat den Vorteil, daß die Pumpeneinrichtung ohne Schwierigkeiten in der Filtereinrichtung integrierbar ist und auch ohne weiteres mit ihr zusammen wartbar und damit zugreifbar ist.

Bei einer anderen vorteilhaften Ausgestaltung der Erfindung sind das erste Filterelement in einer ersten Filterkammer und das zweite Element in einer zweiten Filterkammer angeordnet, wobei die Filterkammern über ein flächenförmiges Begrenzungselement an eine Zulaufkammer für das Rohwasser angrenzen. Durch diese Komponenten wird eine unkomplizierte, mit einfachen Mitteln lösbar und wartbare Filtereinrichtung geschaffen, die es auch dem technisch unversierten Benutzer ermöglicht, eine komplette Wartung der Filtereinrichtung selbst vorzusehen, da die einzelnen Filterkammern ebenso wie das flächenförmige Begrenzungselement aus der Filtereinrichtung lediglich herausgenommen bzw. herausgezogen zu werden brauchen.

Vorteilhaft ist es dabei, die Auslaufkammer integral mit dem Begrenzungselement zu verbinden, wobei die Auslaufkammer dann beispielsweise mit einem rohrförmigen Querschnitt versehen lediglich an das flächenförmige Begrenzungselement angrenzend aber integral mit ihm ausgebildet vorgesehen zu werden braucht.

Vorteilhafterweise ist das Begrenzungselement derart lösbar in einem von der Filtereinrichtung umfaßten Gehäuse ausgebildet, daß es lediglich in im Gehäuse innen ausgebildete Führungen einsteckbar ist. Die Führungen können dabei integral mit dem Gehäusekörper ausgebildet sein, so daß besondere Befestigungsmittel nicht erforderlich sind und auch beim lösen bzw. einstecken des Begrenzungselements keine zusätzlichen Werkzeuge erforderlich sind.

Vorteilhafterweise sind die Filterelemente selbst auf lösbar in das Gehäuse einsetzbaren Siebeinrichtungen angeordnet. Die Siebeinrichtungen liegen dabei lediglich auf an den Gehäuseinnenseitenwänden ausgebildeten Vorsprüngen und an auf gleiche Weise am Begrenzungselement ausgebildeten Vorsprüngen auf, d. h. die Siebeinrichtungen selbst können ohne gesondertes Werkzeug und ohne irgendwelche Verbindungsmittel lösen zu müssen, in die Filtereinrichtung eingelegt bzw. aus ihr herausgenommen werden.

Vorteilhafterweise ist an der Filtereinrichtung eine Mehrzahl von Wassereinlässen vorhanden, um möglichst das Rohwasser von vielen Einlässen, die um die Filtereinrichtung herum verteilt sind, in die gemeinsame Einlaufkammer fließen zu lassen. Das hat u. a. den Vorteil, daß die Rohwassereinlaufgeschwindigkeit pro Wassereinlaß vermindert wird und selbst bei aus irgendwelchen Gründen verstopftem einen Wassereinlaß noch eine genügend große Zahl von Wassereinlässen verbleibt, die nicht geschlossen sind.

Die Wassereinlässe sind gemäß einer weiteren vorzugsweisen Ausgestaltung der Filtereinrichtung im wesentlichen an den Seitenflächen des Gehäuses ausgebildet, es ist aber auch denkbar, ggf. auch den Deckelbereich des Gehäuses mit Wassereinlässen zu versehen. Es ist vorteilhaft, an gegenüberliegenden Seitenflächen des Gehäuses zwei Wasserauslässe vorzusehen, so daß bei wahlweisem Rechts- oder Linkseinbau der Filtereinrichtung in ein Aquariumgefäß entweder die eine oder die andere mit dem jeweiligen Wasserauslaß versehene freie Seite zum Austritt des Reinwassers genutzt werden kann, ohne daß gesonderte Maßnahmen zur Anpassung der Filtereinrichtung an Links- oder Rechtseinbau im Aquariumgefäß vorgesehen werden müssen. Der Wasserauslaß ist vorteilhafterweise mit einer verschwenkbaren und/oder drehbaren Wasserauslaufdüse versehen, so daß der Strahl des aus der Filtereinrichtung austretenden Reinwassers in einer wunschgemäßen, einstellbaren Richtung in das Aquariumgefäß eintreten kann.

Auch ist es vorteilhaft, in der Wasserzulaufkammer eine Heizeinrichtung anzuordnen, mit der auf einfache Weise das Rohwasser zunächst aufgeheizt werden kann, bevor es durch die Filterelemente gefördert wird. Zudem ist diese Maßnahme vorteilhaft, weil ansonsten im eigentlichen Aquariumgefäß keine Maßnahmen getroffen werden müssen, um die Heizeinrichtung dort zu installieren und mit einer elektrischen Spannung zu versorgen.

Die Filterelemente selbst bestehen vorteilhafterweise aus schwammförmigem Polyether, wobei das erste und das zweite Filterelement sich durch unterschiedliche Porösität unterscheiden bzw. unterscheiden können. Es sei aber darauf hingewiesen, daß beliebige andere geeignete Filtermaterialien als das vorgenannte verwendet werden können, soweit sie zur Filterung des Rohwassers im vorbeschriebenen Sinne geeignet sind.

Die Erfindung wird nun unter Bezugnahme auf die einzige schematische Zeichnung anhand eines Ausführungsbeispieles eingehend beschrieben. Diese zeigt:
in perspektivischer Darstellung und teilweise im Schnitt die Filtereinrichtung mit allen erwähnenswerten Details.

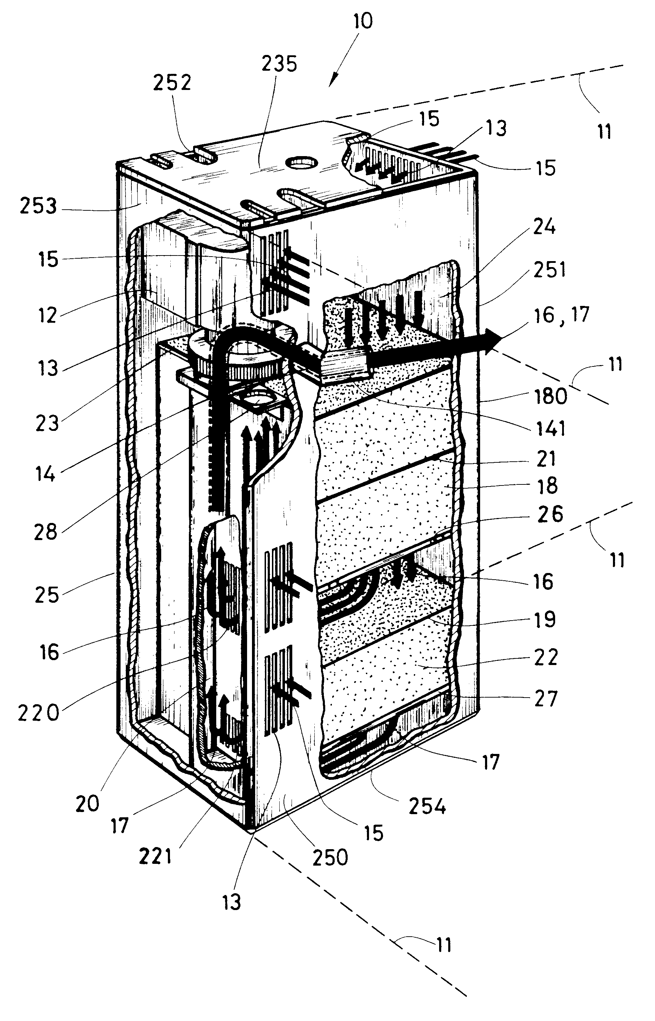

Die Filtereinrichtung 10 besteht aus einem im wesentlichen quaderförmigen Gehäuse 25, das vier flächige Seitenflächen 250, 251, 252 und 253 aufweist, sowie einen Gehäuseboden 254. Das Gehäuse 25 ist in vertikaler Richtung oben, vgl. die einzige Figur, mit einem Gehäusedeckel 255 abgeschlossen, der lediglich auf das Gehäuse 25 aufgelegt zu werden braucht. Eine Mehrzahl von Wassereinlässen 13 ist über die verschiedenen Seitenflächen 250, 251, 252 des Gehäuses verteilt angeordnet. Die Wassereinlässe 13 sind hier schlitzförmig ausgebildet, so daß grobe Verunreinigungen vom Eintritt in das Gehäuse 25 ferngehalten werden. Dieses gilt insbesondere für die obersten, im Bereich der Wasseroberfläche im Aquariumgefäß 11 angeordneten Wassereinlasse 13, die nach Art eines Skinners für die Absaugung bzw. Abschöpfung der Verunreinigungen auf der Wasseroberfläche sorgen. Die oberflächennahen Verunreinigungen sind für die äußerst nachteilige Verhinderung des Gasaustausches des Wassers mit der Umgebungsluft verantwortlich. An zwei gegenüberliegenden Seitenflächen 250, 252 des Gehäuses 25 sind zwei Wasserauslässe 14, 140 vorgesehen, die noch weiter unten im einzelnen beschrieben werden.

Das Gehäuse 25 ist in seinem Inneren durch ein im wesentlichen flächenförmiges Begrenzungselement 23 in vertikaler Richtung unterteilt, das in an den Gehäuseinnenwänden angeordneten Führungen lösbar einsteckbar ist. Quer zum Begrenzungselement 25, d. h. im wesentlichen parallel zum Gehäuseboden 254, sind voneinander beabstandet zwei Siebeinrichtungen 26, 27 angeordnet, die auf an den Innenflächen der Seitenwände des Gehäuses und an der entsprechenden Seite des Begrenzungselements angeordneten, hier nicht dargestellten Vorsprüngen lösbar aufgelegt werden. Über den Siebeinrichtungen 26, 27 werden somit jeweils eine erste Filterkammer 21 (oben) und eine zweite Filterkammer 22 (unten) gebildet. In diesen Filterkammern 21, 22 sind die eigentlichen Filterelemente 18, 19, die aus Polyether oder beliebigen sonstigen anderen geeigneten Materialien bestehen, angeordnet.

Oberhalb des unteren Filterelements 19, das die zweite Filterkammer 22 volumenmäßig nicht ausfüllt, ist ein Freiraum gebildet, der durch das Begrenzungselement 23 hindurch mit einer Öffnung 220 versehen ist, und somit den Durchtritt von Wasser in eine Auslaufkammer 20 gestattet, was noch im einzelnen weiter unten beschrieben wird. Unterhalb der unteren Siebeinrichtung 27 ist ebenfalls ein Freiraum gebildet, der über eine Öffnung 221 durch das Begrenzungselement 23 hindurch einen Durchfluß von Wasser ebenfalls zur Auslaufkammer 20 gestattet. Die Auslaufkammer 20 ist im Querschnitt rohrförmig ausgebildet und integral mit dem Begrenzungselement 23 verbunden. Begrenzungselement 23 und Auslaufkammer 20 bilden somit eine Einheit, die eine einteilige Herstellung gestattet. Die vorerwähnten Öffnungen 220, 221 durch das Begrenzungselement 23 hindurch münden somit unmittelbar in die rohrförmige Auslaufkammer 20.

Die Auslaufkammer 20 ist in vertikaler Richtung, vgl. die Figur, in etwa gleich hoch wie die Höhe des Begrenzungselements 23 als solches ausgebildet. Am oberen Teil der Auslaufkammer 23 ist eine Pumpeneinrichtung 12 lösbar angeordnet, die einen exzentrisch verstellbaren Einlaß aufweist. Der Pumpenauslaß ist mit im Gehäuse 25 an gegenüberliegenden Seitenflächen 250, 252 ausgebildeten Wasserauslässen 14, 140 verbindbar, wobei wahlweise entweder der eine Wasserauslaß 14 oder der andere Wasserauslaß 140 gewählt wird, je nach gewähltem Links- oder Rechtseinbaus im Inneren des Aquariumgehäuses 11. Der Wasserauslaß 14; 140 selbst ist mit einer verschwenkbaren und/oder drehbaren Wasserauslaufdüse 141 versehen, so daß das aus der Filtereinrichtung 10 austretende Gemisch aus Reinwasser 16, 17 unterschiedlicher Reinigungsstufen in der Richtung wahlweise in das Aquariumgefäß überführt werden kann.

Die drehbare Wasserauslaufdüse 141 wird derart eingestellt, daß mittels des austretenden Reinwassers 16, 17 eine Oberflächenströmung im Wasser des Aquariumgefäßes 11 erzeugt wird. Dadurch wird keine zusätzliche Belüftung geschaffen, so daß das im Wasser gelöste CO₂ nicht ausgespült wird und ein wesentlich besserer Pflanzenwuchs im Wasser geschaffen wird.

Der Raum zwischen Begrenzungselement 23 und der Seitenfläche 253 des Gehäuses 25 und der Raum oberhalb der ersten Filterkammer 21 bzw. oberhalb der darin angeordneten, aufeinanderliegenden Filterelemente 18, 180 bildet zusammen eine Zulaufkammer 24, in der das durch alle Wassereinlässe 13ₙ strömende Rohwasser 15, daß das aus dem Aquariumgefäß 11 zugeführte zu reinigende Aquariumwasser darstellt, zusammengeführt wird.

Die Filtereinrichtung 10 arbeitet folgendermaßen. Das Rohwasser 15 wird über die Mehrzahl der Wassereinlässe 13ₙ in die Zulaufkammer 24 geführt. In der Zulaufkammer kann eine Heizeinrichtung 28 vorgesehen sein, die das Rohwasser 15 vor Eintritt in die Filterkammer 21 auf eine gewünschte, einstellbare Temperatur aufheizt. Die Heinzeinrichtung 28 kann elektrisch betrieben werden. Von dort tritt das Rohwasser 15, vgl. die vertikalen Pfeile, in die erste Filterkammer 21 ein, die von zwei aufeinanderliegenden Filterelementen 18, 180 ausgefüllt wird. Nach dem Durchtritt des Rohwassers 15 durch die ersten Filterelemente 18, 180 tritt das Wasser als Reinwasser 16 mit einem 1. Reinheitsgrad aus und teilt sich in seinem Fluß. Ein Teil des Reinwassers 16 mit dem 1. Reinheitsgrad tritt durch die Öffnung 220 in die Auslaufkammer 20 ein, während ein anderer Teil des Reinwassers mit dem 1. Reinheitsgrad in die zweite Filterkammer 22 eintritt, und zwar durch das dort angeordnete zweite Filterelement 19 hindurch. Nach dem Durchtritt durch das zweite Filterelement 19 tritt das dort austretende Reinwasser 17 mit einem 2. Reinheitsgrad durch die Öffnung 221 in die Auslaufkammer 20 ein. In der Auslaufkammer 20 wird das Reinwasser 16 und 17 miteinander gemischt und durch die Pumpeneinrichtung 12 zu dem Wasserauslaß 14 bzw. 140 gefördert und tritt dort durch die dort angebrachte Wasserauslaufdüse 141 aus.

Bei der hier beschriebenen Filtereinrichtung 10 tritt das Reinwasser 16 mit dem 1. Reinheitsgrad zu ca. 70 % durch die Öffnung 220 in die Auslaufkammer 20 ein, während das Reinwasser 17 mit dem 2. Reinheitsgrad zu ca. 30 % durch die Öffnung 221 in die Auslaufkammer 20 eintritt. Das Reinheitsverhältnis zwischen Reinwasser 16 des 1. Reinheitsgrades und Reinwasser 17 2. Reinheitsgrades beträgt somit ca. 70 : 30 % . Dieses Mischungsverhältnis ist jedoch nur beispielhaft zu verstehen, es sind, je nach Erfordernis und der gewählten Filterelemente 18, 180 und 19 auch verschiedene andere Reinheitsgrade wähl- und einstellbar.

Beim Reinigungsvorgang des Rohwassers 15 bilden die in der ersten oberen Filterkammer 21 angeordneten Filterelemente 18, 180 ein biologisches Filter. In diesen Filterelementen können sich sogenannte Nitrifikationsbakterien festsetzen, die mittels im Rohwasser 15 enthaltenen Sauerstoffs ebenfalls im Rohwasser 15 enthaltenes giftiges Nitrit in ungiftiges Nitrat oxydieren. Im internen Filterelement 19 in der zweiten internen Filterkammer 22 findet eine mechanische Feinstfilterung des zugeführten Reinwassers 16 mit dem 1. Reinheitsgrad in das Reinwasser 17 mit dem 2. Reinheitsgrad statt.

Es sei noch darauf hingewiesen, daß die Pumpeneinrichtung 12, die steckbar auf die obere Öffnung der Auslaufkammer 20 ausgebildet ist, aufgrund ihrer exzentrisch verstellbaren Einlaßöffnung sich ohne Schwierigkeiten auf den Links- bzw. Rechtseinbau der Filtereinrichtung 10 in das Aquariumgefäß 11 anpassen läßt, so daß Veränderungen an der Filtereinrichtung 10 nicht nötig sind und ebenfalls dafür keine Werkzeuge benötigt werden.

Durch die steckbare und lösbare Ausbildung der Siebeinrichtungen 26, 27, auf denen die Filterelemente 18, 180 und 19 aufliegen,und durch die steckbare und lösbare Ausbildung des Begrenzungselements 23 und den abnehmbaren Gehäusedeckel 255 lassen sich extrem schnell die gesamten Komponenten der Filtereinrichtung 10 entfernen und reinigen und auch wieder zusammenstecken, so daß auch der ungeübte Laie ohne Schwierigkeiten die Filtereinrichtung 10 selbst warten und reinigen kann.

### Bezugszeichenliste

- 10: Filtereinrichtung
- 11: Aquariumgefäß
- 12: Pumpeneinrichtung
- 13: Wassereinlaß
- 14: Wasserauslaß
- 140: Wasserauslaß
- 141: Wasserauslaßdüse
- 15: Rohwasser
- 16: Reinwasser (1. Reinheitsgrad)
- 17: Reinwasser (2. Reinheitsgrad)
- 18: Filterelement
- 180: Filterelement
- 19: Filterelement
- 20: Auslaufkammer
- 21: Filterkammer (1.)
- 22: Filterkammer (2.)
- 220: Öffnung
- 221: Öffnung
- 230: Begrenzungselement
- 24: Zulaufkammer
- 25: Gehäuse
- 250, 251, 252, 253: Seitenfläche
- 254: Gehäuseboden
- 255: Gehäusedeckel
- 26: Siebeinrichtung
- 27: Siebeinrichtung
- 28: Heizeinrichtung

## Patentansprüche

1. Filtereinrichtung (10) zum Einsatz in Aquariumgefäßen (11), umfassend eine Pumpeneinrichtung (12) zur Förderung des Wassers sowie ein zwischen einem Wassereinlaß (13) zum Eintritt des Rohwassers (15) und einem Wasserauslaß (14) zum Austritt des Reinwassers angeordnetes Filterelement zur Reinigung des Wassers, wobei das Rohwasser (15) zunächst ein erstes Filterelement (18) vollständig durchläuft und als Reinwasser (16) mit einem 1. Reinheitsgrad zu einem größeren Volumenanteil auf den Wasserauslaß (14) gegeben wird und zu einem kleineren Volumenanteil auf ein zweites Filterelement (19), welches das Reinwasser (17) in einem 2. Reinheitsgrad verläßt und nachfolgend ebenfalls auf den Wasserauslaß (14) gegeben wird, dadurch gekennzeichnet, daß das Reinwasser (16, 17) mit 1. und 2. Reinheitsgrad einer gemeinsamen Auslaufkammer (20) zugeführt wird, die mit dem Wasserauslaß (14) verbunden ist, wobei das erste Filterelement (18) ein biologisches Filter und das zweite Filterelement (19) ein mechanisches Filter ist.

2. Filtereinrichtung nach Anspruch 1, dadurch gekennzeichnet, daß der Volumenanteil des Reinwassers (16) mit einem 1. Reinheitsgrad ca. 70 % und der des Reinwassers (17) mit einem 2. Reinheitsgrad ca. 30 % beträgt.

3. Filtereinrichtung nach einem oder beiden der Ansprüche 2 oder 3, dadurch gekennzeichnet, daß zwischen Auslaufkammer (20) und Wasserauslaß (14) die Pumpeneinrichtung (12) angeordnet ist.

4. Filtereinrichtung nach einem oder mehreren der Ansprüche 1 bis 3, dadurch gekennzeichnet, daß das erste Filterelement (18) in einer ersten Filterkammer (21) und das zweite Filterelement (19) in einer zweiter Filterkammer (22) angeordnet ist, wobei die Filterkammern (21, 22) über ein flächenförmiges Begrenzungselement (23) an eine Zulaufkammer (24) für das Rohwasser (15) angrenzen.

5. Filtereinrichtung nach Anspruch 4, dadurch gekennzeichnet, daß die Auslaufkammer (20) integral mit dem Begrenzungselement (23) verbunden ist.

6. Filtereinrichtung nach einem oder beiden der Ansprüche 4 oder 5, dadurch gekennzeichnet, daß das Begrenzungselement (23) lösbar in ein von der Filtereinrichtung (10) umfaßtes Gehäuse (25) mit darin ausgebildeten Führungen einsteckbar ist.

7. Filtereinrichtung nach Anspruch 6, dadurch gekennzeichnet, daß die Filterelemente (18, 19) auf lösbar in das Gehäuse (25) einsetzbaren Siebeinrichtungen (26, 27) angeordnet sind.

8. Filtereinrichtung nach einem oder mehreren der Ansprüche 1 bis 7, dadurch gekennzeichnet, daß eine Mehrzahl von Wassereinlässen (13ₙ) vorhanden ist.

9. Filtereinrichtung nach Anspruch 8, dadurch gekennzeichnet, daß die Wassereinlässe (13ₙ) im wesentlichen an den Seitenflächen (250, 251, 252) des Gehäuses (25) angeordnet sind.

10. Filtereinrichtung nach einem oder mehreren der Ansprüche 1 bis 9, dadurch gekennzeichnet, daß an gegenüberliegenden Seitenflächen (250, 252) des Gehäuses (25) wenigstens zwei Wassereinlässe (14, 140) vorgesehen sind.

11. Filterelement nach einem oder mehreren der Ansprüche 1 bis 10, dadurch gekennzeichnet, daß der Wasserauslaß (14; 140) mit einer verschwenkbaren und/oder drehbaren Wasserauslaufdüse (141) versehen ist.

12. Filtereinrichtung nach einem oder mehreren der Ansprüche 1 bis 11, dadurch gekennzeichnet, daß in der Wasserzulaufkammer (24) eine Heizeinrichtung (28) angeordnet ist.

13. Filtereinrichtung nach einem oder mehreren der Ansprüche 1 bis 12, dadurch gekennzeichnet, daß die Filterelemente (18, 19) aus schwammförmigem Polyether bestehen.

## Claims

1. A filter arrangement (10) for use in aquarium vessels (11) comprising a pump means (12) for conveying water and, between a water inlet (13) for letting in crude water (15) and a water outlet (14) to allow the emergence of pure water, a filter element for cleaning the water, the crude water (15) initially passing completely through a first filter element (18) and emerging as pure water (16) with a first degree of purity and to a larger proportion of volume to the water outlet (14) and to a smaller proportion of water which is applied to a second filter element (19) which leaves the clean water (17) in a second degree of purity and which is subsequently likewise delivered to the water outlet (14), characterised in that the clean water (16, 17) of first and second degrees of purity is fed to a common outlet chamber (20) which is connected to the water outlet (14), the first filter element (18) being a biological filter while the second filter element (19) is a mechanical filter.

2. A filter arrangement according to claim 1, characterised in that the proportion of the volume of the clean water (16) with a first degree of purity amounts to approx.70% while the proportion of the volume of clean water (17) with a second degree of purity amounts to approx. 30%.

3. A filter arrangement according to one or both of claims 2 or 3, characterised in that between the outlet chamber (20) and the water outlet (14) there is the pump arrangement (12).

4. A filter arrangement according to one or more of claims 1 to 3, characterised in that the first filter element (18) is disposed in a first filter chamber (21) while the second filter element (19) is disposed in a second filter chamber (22), the filter chambers (21, 22) having a flat defining element (23) adjacent a feed chamber (24) for the crude water (15).

5. A filter arrangement according to claim 4, characterised in that the outlet chamber (20) is integrally connected to the limiting element (23).

6. A filter arrangement according to one or both of claims 4 or 5, characterised in that the limiting element (23) can be separably fitted into a housing (25) comprised by the filter arrangement (10) and which has guides constructed into it.

7. A filter arrangement according to claim 6, characterised in that the filter elements (18, 19) are disposed on screening means (26, 27) adapted for insertion separably into the housing (25).

8. A filter arrangement according to one or more of claims 1 to 7, characterised in that a plurality of water inlets (13ₙ) is provided.

9. A filter arrangement according to claim 8, characterised in that the water inlets (13ₙ) are disposed substantially on the lateral surfaces (250, 251, 252) of the housing (25).

10. A filter means according to one or more of claims 1 to 9, characterised in that on oppositely disposed lateral surfaces (250, 252) of the housing (25) there are at least two water inlets (14, 140).

11. A filter element according to one or more of claims 1 to 10, characterised in that the water outlet (14; 140) is provided with a pivotable and/or rotatable water outlet jet (141).

12. A filter arrangement according to one or more of claims 1 to 11, characterised in that a heating means (28) is disposed in the water supply chamber (24).

13. A filter arrangement according to one or more of claims 1 to 13, characterised in that the filter elements (18, 19) consist of sponge-like polyether.

## Revendications

1. Installation de filtration (10) pour aquarium (11), incluant une installation de pompage (12) pour l'alimentation en eau ainsi qu'un élément de filtration pour la purification de l'eau, disposé entre une entrée d'eau (13) pour l'admission de l'eau brute (15) et un échappement d'eau (14) pour la sortie de l'eau pure, l'eau brute (15) traversant tout d'abord entièrement un premier élément de filtration (18) et étant délivrée à l'échappement (14) en temps qu'eau pure (16) présentant un degré de pureté 1 selon une fraction volumique plus importante, et selon une fraction volumique plus faible à un deuxième élément de filtration (19) qui délivre l'eau pure (17) dans un état de pureté 2 et ensuite la dirige également vers l'échappement d'eau (14), caractérisée en ce que l'eau pure (16,17) présentant un degré de pureté 1 et 2 est dirigées vers une enceinte commune de sortie (20) qui est reliée à l'échappement d'eau (14), le premier élément de filtration (18) étant un filtre biologique et le second élément de filtration (19) étant un filtre mécanique.

2. Installation de filtration selon la revendication 1, caractérisée en ce que la fraction volumique de l'eau pure (16) présentant un degré de pureté 1 est d'environ 70 % et celle de l'eau pure (17) présentant un degré de pureté 2 est d'environ 30 %.

3. Installation de filtration selon l'une ou deux des revendications 2 ou 3 caractérisée en ce que l'installation de pompage (12) est disposée entre l'enceinte de sortie (20) et l'échappement d'eau (14).

4. Installation de filtration selon l'une ou plusieurs des revendications 1 à 3, caractérisée en ce que le premier élément de filtration (18) est disposé dans une première enceinte de filtration (21) et en ce que le second élément de filtration (19) est disposé dans une seconde enceinte de filtration (22), les enceintes de filtration (21,22) étant adjacentes à une enceinte d'arrivée (24) pour l'eau brute (15), par l'intermédiaire d'un élément de séparation (23) de forme surfacique.

5. Installation de filtration selon la revendication 4, caractérisée en ce que l'enceinte de sortie (20) est reliée intégralement à l'élément de séparation (23).

6. Installation de filtration selon l'une ou deux des revendications 4 ou 5, caractérisée en ce que l'élément de séparation (23) est enfichable de manière amovible dans un logement (25) compris dans l'installation de filtration (10), et comportant des guidages réalisés dans son intérieur.

7. Installation de filtration selon la revendication 6, caractérisée en ce que les éléments de filtration (18,19) sont disposés sur des appareils tamiseurs (26,27) qui peuvent être installés de manière amovible dans le logement (25).

8. Installation de filtration selon l'une ou plusieurs des revendications de 1 à 7, caractérisée en ce qu'existe une pluralité d'entrée d'eau (13ₙ).

9. Installation de filtration selon la revendication 8, caractérisée en ce que les entrées d'eau (13ₙ) sont disposées sensiblement sur les surfaces latérales (250,251,252) du logement (25).

10. Installation de filtration selon l'une ou plusieurs des revendications de 1 à 9, caractérisée en ce que sont prévues au moins deux entrées d'eau (14,140) sur des surfaces latérales opposées (250,252) du logement (25).

11. Installation de filtration selon l'une ou plusieurs des revendications de 1 à 10, caractérisée en ce que l'échappement d'eau (14;140) est pourvu d'une buse de sortie d'eau (141) orientable et/ou pivotante.

12. Installation de filtration selon l'une ou plusieurs des revendications de 1 à 11, caractérisée en ce qu'une installation de chauffage (28) est disposée dans l'enceinte d'arrivée d'eau (24).

13. Installation de filtration selon l'une ou plusieurs des revendications de 1 à 12, caractérisée en ce que les éléments de filtration (18,19) se composent de polyéther spongieux.
